Europäisches Patentamt

(19) European Patent Office

Office européen des brevets

(11) Veröffentlichungsnummer: **0 031 411**
**B1**

(12) **EUROPÄISCHE PATENTSCHRIFT**

(45) Veröffentlichungstag der Patentschrift:
**22.08.84**

(51) Int. Cl.³: **B 60 T 13/16,** B 60 T 11/22

(21) Anmeldenummer: **80106432.0**

(22) Anmeldetag: **24.10.80**

(54) **Geberzylinder für die Aussteuerung von Druckmittel.**

(30) Priorität: **24.12.79 DE 2952364**

(43) Veröffentlichungstag der Anmeldung:
**08.07.81 Patentblatt 81/27**

(45) Bekanntmachung des Hinweises auf die Patenterteilung:
**22.08.84 Patentblatt 84/34**

(84) Benannte Vertragsstaaten:
**DE FR GB IT**

(56) Entgegenhaltungen:
**DE - A - 1 680 246**
**DE - A - 1 815 878**
**DE - A - 1 907 930**
**DE - A - 1 928 625**
**DE - A - 2 941 808**
**DE - B - 1 261 400**
**GB - A - 878 318**

(73) Patentinhaber: **WABCO Westinghouse**
**Fahrzeugbremsen GmbH, Am Lindener**
**Hafen 21 Postfach 91 12 80, D-3000 Hannover 91 (DE)**

(72) Erfinder: **Staisch, Dieter, Sunderstrasse 108,**
**D-3030 Walsrode 1 (DE)**

(74) Vertreter: **Schrödter, Manfred, WABCO Westinghouse**
**Fahrzeugbremsen GmbH Am Lindener**
**Hafen 21 Postfach 91 12 80, D-3000 Hannover 91 (DE)**

## Beschreibung

Die Erfindung betrifft einen Geberzylinder für die Aussteuerung von Druckmittel zur Betätigung von Druckmittelverbrauchern, insbesondere Fahrzeugbremszylinder, gemäss dem Oberbegriff des Patentanspruchs 1.

Ein Geberzylinder der eingangs genannten Art ist aus der GB-A-878 318 bekannt. Dem Geberkolben ist eine ihm vorgeschaltete Kammer zugeordnet, welche einen Druckmittelanschluss und einen von diesem getrennten Rücklaufanschluss aufweist. Die Kammer ist an einer Seite von dem Geberkolben und an der anderen Seite von einem Stössel begrenzt. Der Stössel weist eine in die Kammer eingreifende, nach innen abgestufte Verlängerung auf, mit welcher der Rücklauf bei Betätigung des Stössels drosselbar und in der Kammer Druck zur Betätigung des Geberkolbens aufstaubar ist. Dabei ist nachteilig, dass der Stössel eine im Drosselpunkt begrenzte, wegabhängige Betätigung aufweist, wodurch der Druck in der Kammer unzureichend feinfühlig aufstaubar und der Stössel bei Druckausfall in der Betätigungsphase zwecks mechanischer Betätigung des Geberkolbens mit einem zu grossen Leerweg und unter dabei gegebener, erheblicher Schlagwirkung betätigbar ist.

Der Erfindung liegt somit die Aufgabe zugrunde, einen einfach baubaren Geberzylinder der eingangs erwähnten Art zu schaffen, mit welchem in einer dem Geberkolben vorgeschalteten Kammer ein Druck zur Unterstützung der Betätigungskraft feinfühlig aufstaubar ist.

Die Aufgabe wird durch die in dem Patentanspruch 1 angegebene Erfindung gelöst.

Weiterbildungen und vorteilhafte Ausgestaltungen der Erfindung sind in den Unteransprüchen aufgezeigt.

Die mit der Erfindung erzielbaren Vorteile bestehen u. a. darin, dass die zur Bildung der Drucksteuereinrichtung vorgeschlagene Steuerhülse auf engstem Raum auf einer Verlängerung des Stössels gleitend verschiebbar und über eine stösselseitig abgestützte zweite Feder mit dem Stössel betätigbar angeordnet werden kann. Der Stössel ist mit der derart angeordneten Steuerhülse in vorteilhafter Weise vormontierbar und durch einfaches Einschieben in die Zylinderbohrung montierbar, wobei die einerseits von dem Geberkolben begrenzte Kammer anderseits sowohl von dem Stössel als auch von der Steuerhülse begrenzt ist. Auf diese Weise ist die Steuerhülse über die zweite Feder mit dem Stössel gegen die Wirkung des in der Kammer gegebenen Druckes betätigbar und der Rücklauf der Kammer über die entlang der kammerseitigen Aussenkante der Steuerhülse gebildete Steuerkante äusserst feinfühlig drosselbar. Dabei ist ausserdem der Stössel in der Drosselstellung gegen die Wirkung des in der Kammer aufgestauten Druckes und gegen die Kraft der zweiten Feder relativ zur Steuerhülse verschiebbar, so dass der Stössel dem durch den in der Kammer aufgestauten Druck betätigten Geberkolben mit einem relativ geringen Abstand folgen und den Geberkolben bei Druckausfall unter Vermeidung eines übergrossen Leerweges und damit verbundener derber Schlagwirkung mechanisch betätigen kann.

Die bei Druckausfall ermöglichte mechanische Betätigung des Geberkolbens erfolgt ausserdem direkt mit dem Stössel, wodurch Beschädigungen der Steuerhülse, insbesondere der an der Steuerhülse gebildeten Steuerkante, ausgeschlossen werden.

Bei druckabhängig verstärkt betätigtem Geberkolben ist der Druck in den beiden Kammern beiderseits des Geberkolbens praktisch ausgeglichen, so dass Druckmittelverbraucher mit gleichem Druck sowohl von der Geberkammer als auch von der dem Geberkolben vorgeschalteten Kammer versorgbar sind. Dadurch kann beispielsweise ein erster Fahrzeugbremskreis über einen mit der Geberkammer verbundenen Verbraucheranschluss und ein zweiter Fahrzeugbremskreis und/oder Anhängerbremsventil über einen weiteren mit der dem Geberkolben vorgeschalteten Kammer verbundenen Verbraucheranschluss versorgt werden, wodurch bei einem Defekt der relativ langen und damit auch relativ bruchgefährdeten Bremsleitungen eines Fahrzeugbremskreises, der andere Fahrzeugbremskreis druckmittelversorgbar und damit funktionsfähig erhalten bleibt.

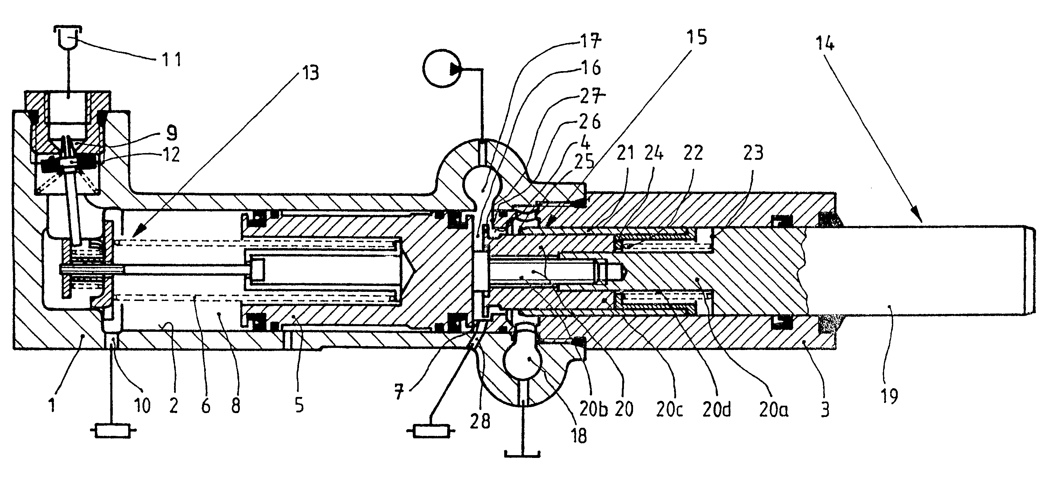

Die Erfindung wird nachfolgend anhand eines in der Zeichnung dargestellten Ausführungsbeispiels beschrieben.

Die Figur zeigt einen Längsschnitt durch einen Geberzylinder.

Der dargestellte Geberzylinder weist einen ersten Gehäuseteil 1 mit einer einseitig geschlossenen Zylinderbohrung 2 auf.

An dem ersten Gehäuseteil 1 ist ein zweiter Gehäuseteil 3 abgedichtet befestigt.

Die Zylinderbohrung 2 weist an ihrer offenen Seite eine nach innen abgestufte Verlängerung 4 auf, welche durch eine durchgehende Bohrung des zweiten Gehäuseteils 3 gebildet ist.

In dem Teil grösseren Durchmessers der abgestuften Zylinderbohrung 2 ist ein Geberkolben 5 abgedichtet und gleitend verschiebbar angeordnet, welcher in seiner unbetätigten Ausgangsstellung unter der Kraft einer bodenseitig in der Zylinderbohrung 2 abgestützten ersten Feder 6 an einem gehäusefesten Anschlag 7 anliegt, der von der Abstufung der Zylinderbohrung 2 gebildet ist.

Der Geberkolben 5 begrenzt eine in dem Teil grösseren Durchmessers der Zylinderbohrung 2 gebildete Geberkammer 8, welche eine Nachlaufbohrung 9 und einen Verbraucherauslass 10 aufweist.

Die Nachlaufbohrung 9 ist mit einem Nachlaufbehälter 11 verbunden. Der Nachlaufbohrung 9 ist ein über eine mit dem Geberkolben 5 in bekannter Weise zusammenwirkende Betätigungseinrichtung 13 betätigbares Kippventil 12 zugeordnet, welches bei unbetätigtem Geberkolben 5 von dem Geberkolben 5 in Offenstellung gehalten wird und bei betätigtem Geberkolben 5 eine federbelastete Schliessstellung einnimmt, wodurch die Nachlaufbohrung 9 bei unbetätigtem Geberkolben 5 mit der Geberkammer 8 verbunden und bei betätigtem Geberkolben 5 von der Geberkammer 8 gesperrt ist.

Auf dem Verbraucheranschluss 10 ist – wie angedeutet – beispielsweise eine Bremsleitung für die Druckmittelbetätigung von Fahrzeugbremsen oder anderer Verbraucher anschliessbar.

In der nach innen abgestuften Verlängerung 4 der Zylinderbohrung 2 sind ein Betätigungsglied 14 für die Betätigung des Geberkolbens 5 und eine von dem Betätigungsglied 14 betätigbare Drucksteuereinrichtung 15 angeordnet.

In der Zylinderbohrung 2 ist ferner eine Kammer 16 gebildet, welche an der einen Seite von dem Geberkolben 5 und an der anderen Seite von dem Betätigungsglied 14 und der Drucksteuereinheit 15 begrenzt ist.

Die Kammer 16 weist einen mit einer Druckmittelquelle verbundenen Druckmitteleinlass 17 und einen von der Drucksteuereinrichtung 15 drosselbaren Rücklauf 18 auf.

Das Betätigungsglied 14 ist von einem Stössel 19 gebildet, welcher in dem Teil kleineren Durchmessers der abgestuften Zylinderbohrung 2 abgedichtet und gleitend verschiebbar geführt angeordnet ist.

Der Stössel 19 weist eine nach innen abgestufte Verlängerung 20 auf, welche axial in die Kammer 16 eingreift und in der unbetätigten Ausgangsstellung des Geberkolbens 5 stirnseitig an dem Geberkolben 5 anliegt.

Die Verlängerung 20 ist im dargestellten Ausführungsbeispiel durch einen Stösselansatz 20a und ein koaxial auf den Stösselansatz 20a aufgeschobenes und mit einer Schraube 20b an dem Stösselansatz 20a befestigtes hohlzylindrisches Füllstück 20c gebildet.

Die Drucksteuereinrichtung 15 weist eine Steuerhülse 21 auf, welche auf der Verlängerung 20 des Stössels 19 verschiebbar angeordnet ist.

Die Steuerhülse 21 ist gegen die Betätigungseinrichtung des Stössels 19 gegen die Kraft einer zweiten Feder 22 verschiebbar.

Die zweite Feder 22 ist an einer Schulter 23 des Stössels 19 abgestützt, welche durch die nach innen abgestufte Verlängerung 20 gebildet ist.

Die zweite Feder 22 ist im dargestellen Ausführungsbeispiel in raumsparender Weise in einer ringförmigen Ausnehmung 20d der Verlängerung 20 angeordnet, welche im Bereich des Stösselansatzes 20a zwischen der Schulter 23 und dem Füllstück 20c gebildet ist, wobei sich die Feder 22 an der Seite des Füllstückes 20c an einem im Bereich der Ausnehmung 20d verschiebbaren und zum Stössel 19 sowie nach aussen stufenförmig abgewinkelten Federteller 24 abstützt, über welchen die Steuerhülse 21 mitnehmbar ist.

Die Steuerhülse 21 weist an ihrer der Kammer 16 zugewandten Stirnfläche eine entlang der Aussenkante gebildete Steuerkante 25 auf, über welche der Rücklauf 18 drosselbar ist.

Die Steuerhülse 21 ist in dem Teil kleineren Durchmessers der abgestuften Zylinderbohrung 2 so angeordnet, dass die Kammer 16 an der dem Geberkolben 5 gegenüberliegenden Seite von der Steuerhülse 21 und der Verlängerung 20 des Stössels 19 begrenzt ist.

Die Verlängerung 20 weist an ihrem freien Ende einen Anschlag 26 auf, welcher die Verschiebbarkeit der Steuerhülse 21 in Richtung zur Kammer 16 begrenzt.

Durch den Anschlag 26 und einen in dem Teil kleineren Durchmessers der abgestuften Zylinderbohrung 2 gebildeten gehäusefesten Anschlag 27 ist das Betätigungsglied 14 in seiner Verschiebbarkeit gegen die Betätigungsrichtung begrenzt und somit gegen ungewolltes Herausgleiten aus der Zylinderbohrung 2 gesichert.

Die Kammer 16 weist einen Verbraucheranschluss 28 auf, an welchem in dem dargestellten Ausführungsbeispiel ein weiterer Bremskreis – wie angedeutet – angeschlossen ist. Es können auch mehrere Druckmittelverbraucher, wie beispielsweise weitere Bremskreise und/oder ein Anhängerbremsventil angeschlossen werden.

Die Wirkungsweise des so weit beschriebenen Geberzylinders ist wie folgt:

Die Figur zeigt den Geberzylinder in seiner Ausgangsstellung, in welcher das Betätigungsglied 14 unbetätigt ist. Dabei liegt der Geberkolben 5 unter der Wirkung der Feder 6 an der Schulter 7 der abgestuften Zylinderbohrung 2 an und hält über die ihm zugeordnete Betätigungseinrichtung 13 das der Nachlaufbohrung 9 vorgeschaltete Kippventil 12 in Offenstellung, so dass die Geberkammer 8 mit dem Nachlaufbehälter 11 verbunden und der Verbraucheranschluss 10 drucklos sind. Ausserdem liegen der in seiner Rückstellbewegung durch die Anschläge 26 und 27 begrenzte Stössel 19 über seine Verlängerung 20 an dem Geberkolben 5 und die Steuerhülse 21 an dem Federteller 24 an, so dass der Rücklauf 18 entsperrt und die Kammer 16 mit dem Verbraucheranschluss praktisch drucklos sind. Die an dem Druckmitteleinlass 17 angeschlossene Druckmittelquelle fördert maximal entlastet über die Kammer 16 in den Rücklauf 18.

Der Geberzylinder ist über das Betätigungsglied 14 betätigbar. Sobald auf das Betätigungsglied 14 eine Betätigungskraft einwirkt, ist der Stössel 19 des Betätigungsgliedes 14 unter der Wirkung der Betätigungskraft unter Mitnahme des Geberkolbens 5 über die Verlängerung 20 gegen die Kraft der Feder 6 verschiebbar, wobei zugleich die Steuerhülse 21 über die Feder 22 und den Federteller 24 unter Drosselung des Rücklaufs 18 mitgenommen und das Kippventil 12 über die dem Geberkolben 5 zugeordnete Betätigungseinrichtung 13 in seine Schliessstellung bewegt werden. Aufgrund des nun gedrosselten Rücklaufs 18 baut sich über den offenen Druckmitteleinlass 17 in der Kammer 16 ein Staudruck auf, welcher den Geberkolben 5 über eine relativ grosse Wirkfläche in Betätigungsrichtung und die Verlängerung 20 des Stössels 19 sowie die Steuerhülse 21 über eine relativ kleine Wirkfläche gegen die Betätigungseinrichtung beaufschlagt. Dabei ist nunmehr der Stössel 19 des Betätigungsgliedes 14 äusserst feinfühlig gegen die Wirkung des Staudruckes der Kammer 16 und die Kraft der Feder 22, gegenüber der Steuerhülse 21 relativ verschiebbar betätigbar. Dabei ist ferner der Geberkolben 5 unter der Wirkung des Staudruckes in der Kammer 16 gegen die Kraft der Feder 6 und gegen die Wirkung des sich in der vom Nachlaufbehälter 11 abgeschalteten Geberkammer 8 aufbauenden Geberdruckes in einer die an dem Betätigungsglied 14 angreifenden Betätigungskraft verstärkenden Weise rein druckabhängig betätigbar.

Sobald in der Kammer 16 ein bestimmter, von der an dem Betätigungsglied 14 angreifenden Betätigungskraft abhängiger Staudruck und in der Geberkammer 8 ein zusammen mit der Wirkung der Feder 6 dem Staudruck entsprechender Geberdruck aufgebaut sind, ist die Steuerhülse 21 unter der Wirkung des Staudruckes gegen die Kraft der Feder 22 gegenüber der Verlängerung 20 des Stössels 19 relativ verschiebbar, wodurch der Rücklauf 18 über die Steuerkante 25 der Steuerhülse 21 in einer den Steuerdruck in der Kammer 16 begrenzenden Weise steuerbar ist.

Sobald die Betätigung an dem Betätigungsglied 14 endet, sind der Stössel 19 und bei sich entspannender Feder 22 zugleich auch die Steuerhülse 21 unter der überwiegenden Wirkung des Staudruckes gegen die Betätigungsrichtung bewegbar, wodurch der Rücklauf 18 freigegeben wird. Dadurch bauen sich augenblicklich der Staudruck in der Kammer 16 und der Geberdruck in der Geberkammer 8 ab, und der Geberkolben 5 sowie das von ihm mitnehmbare Betätigungsglied 14 nehmen unter der Rückstellwirkung der Feder 6 ihre zuvor beschriebene Ausgangsstellung ein, wobei der Geberkolben 5 über die ihm zugeordnete Betätigungseinrichtung 13 das Kippventil 12 und damit die Verbindung der Geberkammer 8 über die Nachlaufbohrung 9 mit dem Nachlaufbehälter 11 öffnet.

Bei einem Ausfall der an dem Druckmitteleinlass 17 der Kammer 16 angeschlossenen Druckmittelquelle ist der Geberkolben 5 über den mit seiner Verlängerung 20 in der Ausgangsstellung an dem Geberkolben 5 anliegenden Stössel 19 unter Vermeidung eines Leerweges mechanisch betätigbar. Fällt die Druckmittelquelle während einer Betätigung des Geberzylinders aus, so ist aufgrund der zuvor erörterten Anordnung des Betätigungsgliedes 14 und der Drucksteuereinrichtung 15 eine weitere mechanische Betätigung des Geberkolbens 5 unter Zurücklegung eines relativ geringen Leerweges möglich.

Wenn die Druckmittelversorgung des Druckmitteleinlasses 17 der Kammer 16 über einen Druckspeicher erfolgen soll, ist eine Steuerhülse vorzusehen, welche den Druckmitteleinlass 17 in der Ausgangsstellung des Geberzylinders über eine entsprechende Verlängerung sperrt und bei Betätigung des Geberzylinders öffnet.

Auf diese Weise ist ein einfach baubarer, über das Betätigungsglied 14 mechanisch und über die mit dem Betätigungsglied 14 zusammenwirkende Drucksteuereinrichtung 15 sowie die dem Geberkolben 5 direkt vorgeschaltete Kammer 16 druckabhängig verstärkt betätigbarer Geberzylinder aufgezeigt. Dabei ist, wenn man einmal von der Wirkung der den Geberkolben 5 zurückstellenden Feder 6 absieht, ein in seiner Höhe dem in der Kammer 16 gebildeten Stau- oder Betätigungsdruck entsprechender Geberdruck aussteuerbar, so dass der Verbraucheranschluss 10 der Geberkammer 8 und der an der Kammer 16 gebildete Verbraucheranschluss 28 untereinander praktisch druckausgeglichen, aber voneinander getrennt versorgbar sind. Dabei ist ferner bei ausbleibendem Staudruck in der Kammer 16, beispielsweise infolge eines Ausfalls der Druckmittelquelle, an dem Verbraucherauslass 10 der Geberkammer 8 ein Geberdruck mit dem mechanisch betätigbaren Geberkolben 5 aussteuerbar. Dabei ist schliesslich bei ausbleibendem Geberdruck, beispielsweise infolge eines Fehlers in dem mit dem Verbraucheranschluss 10 der Geberkammer 8 verbundenen Verbraucherkreis, an dem Verbraucheranschluss 28 der Kammer 16 ein Staudruck mit der vom Geberdruck unabhängig betätigbaren Drucksteuereinrichtung 15 aussteuerbar.

**Patentansprüche**

1. Geberzylinder für die Aussteuerung von Druckmittel zur Betätigung von Druckmittelverbrauchern, insbesondere Fahrzeugbremszylindern, mit folgenden Merkmalen:

a) der Geberzylinder weist eine einseitig geschlossene Zylinderbohrung (2) mit einem Nachlaufeinlass (9, 11) und einem Verbraucheranschluss (10) auf,

b) in der Zylinderbohrung (2) ist ein Geberkolben (5) abgedichtet verschiebbar angeordnet,

c) der Geberkolben (5) ist gegen die Kraft einer ersten Feder (6) betätigbar, wobei die Nachlaufbohrung (9) abgesperrt wird,

d) zur Betätigung des Geberkolbens (5) ist ein Betätigungsglied (14) vorgesehen,

e) in der Zylinderbohrung (2) ist eine dem Geberkolben (5) vorgeschaltete Kammer (16) gebildet, welche einen Druckmittelanschluss (17) und einen von dem Druckmittelanschluss (17) getrennten Rücklaufanschluss (18) aufweist,

f) der Rücklaufanschluss (18) ist über eine Drucksteuereinrichtung (15) steuerbar, welche von dem Betätigungsglied (14) betätigbar ist,

g) das Betätigungsglied (14) weist einen Stössel (19) auf, welcher an der dem Geberkolben (5) gegenüberliegenden Seite in die Kammer (16) einschiebbar angeordnet ist,

h) der Stössel (19) weist eine nach innen abgestufte Verlängerung (20) auf, welche axial in die Kammer (16) eingreift, gekennzeichnet durch folgende Merkmale:

i) die Drucksteuereinrichtung (15) weist eine auf der Verlängerung (20) des Stössels (19) gleitend geführte Steuerhülse (21) auf,

j) die Steuerhülse (21) ist gegen die Kraft einer zweiten Feder (22) entgegen der Betätigungsrichtung verschiebbar angeordnet,

k) die Steuerhülse (21) weist an ihrer der Kammer (16) zugewandten Seite eine mit dem Rücklauf (18) zusammenwirkende Steuerkante (25) auf,

l) die Kammer (16) ist an ihrer dem Geberkolben (5) gegenüberliegenden Seite von der Steuerhülse (21) und der Verlängerung (20) des Stössels (19) begrenzbar,

m) die Steuerhülse (21) ist mit dem Stössel (19) über die zweite Feder (22) unter Drosselung des Rücklaufs (18) gegen die Wirkung des in der Kammer (16) gebildeten Druckmittelstaudruckes gegenüber der Verlängerung (20) relativ verschiebbar betätigbar.

2. Geberzylinder nach dem Anspruch 1, dadurch gekennzeichnet, dass die zweite Feder (22) einerseits an einer durch die Verlängerung (20) gebildeten Schulter (23) des Stössels (19) und anderseits an der Steuerhülse (21) abgestützt angeordnet ist.

3. Geberzylinder nach einem der Ansprüche 1 und 2, dadurch gekennzeichnet, dass die zweite Feder (22) über einen im Bereich der Verlängerung (20) verschiebbaren Federteller (24) an der Steuerhülse (21) abstützbar ist.

4. Geberzylinder nach einem der Ansprüche 1 bis 3, dadurch gekennzeichnet, dass die Verlängerung (20) einen Anschlag (26) aufweist, welcher die Verschiebbarkeit der Steuerhülse (21) oder des ihr zugeordneten Federtellers (24) für die Abstützung der Feder (22) zum freien Ende der Verlängerung (20) begrenzt.

5. Geberzylinder nach einem der Ansprüche 1 bis 4, dadurch gekennzeichnet, dass die Zylinderbohrung (2) im Bereich der Kammer (16) einen gehäusefesten Anschlag (27) aufweist, welcher die Verschiebbarkeit des Stössels (19) zur Betätigungsseite begrenzt.

6. Geberzylinder nach einem der Ansprüche 1 bis 5, dadurch gekennzeichnet, dass die Verlängerung (20) bei unbetätigtem Stössel (19) stirnseitig an dem Geberkolben (5) anliegt.

**Claims**

1. Master cylinder for controlling pressure medium for actuating pressure medium users, especially brake cylinders for vehicles, having the following features:

a) the master cylinder has a cylinder bore (2) that is closed at one end and has a controlled inlet (9, 11) and a user connection (10),

b) a master piston (5) is arranged in the cylinder bore (2) so that it is sealed and can be displaced,

c) the master piston (5) can be actuated against the force of a first spring (6), the controlled bore (9) being blocked,

d) for actuating the master piston (5) there is provided an actuating member (14),

e) there is formed in the cylinder bore (2) a chamber (16) which is connected upstream of the master piston (5) and has a pressure medium connection (17) and a return connection (18) that is separated from the pressure medium connection (17),

f) the return connection (18) can be controlled via a pressure control device that can be actuated by the actuating member (14),

g) the actuating member (14) has a push rod (19) which is arranged at the side opposed to the master piston (5) so that it can be pushed into the chamber (16),

h) the push rod (19) has an inwardly stepped extension (20) which engages axially in the chamber (16), characterised by the following features:

i) the pressure control device (15) has a control sleeve (21) that is slidably guided on the extension (20) of the push rod (19),

j) the control sleeve (21) is arranged so that it can be displaced against the force of a second spring (22) contrary to the direction of actuation,

k) at its side facing the chamber (16), the control sleeve (21) has a control edge (25) cooperating with the return (18),

l) at its side opposed to the master piston (5), the chamber (16) can be delimited by the control sleeve (21) and the extension (20) of the push rod (19),

m) the control sleeve (21) can be actuated by the push rod (19) via the second spring (22), against the action of the pressure head of the pressure medium formed in the chamber, to throttle the return (18), the control sleeve being displaceable relative to the extension (20).

2. Master cylinder according to claim 1, characterised in that the second spring (22) is arranged so that it is supported on the one side on a shoulder (23) of the push rod (19) formed by the extension (20) and on the other side on the control sleeve (21).

3. Master cylinder according to one of claims 1 and 2, characterised in that the second spring (22) can be supported on the control sleeve (21) via a spring collar (24) that can be displaced in the region of the extension (20).

4. Master cylinder according to one of claims 1 to 3, characterised in that the extension (20) has a stop (26) which limits the displaceability of the control sleeve (21) or of the spring collar (24) associated therewith for supporting the spring (22) at the free end of the extension (20).

5. Master cylinder according to one of claims 1 to 4, characterised in that, in the region of the chamber (16), the cylinder bore (2) has a stop (27) that is rigidly connected to the housing and limits the displaceability of the push rod (19) towards the actuating side.

6. Master cylinder according to one of claims 1 to 5, characterised in that when the push rod (19) is not actuated the extension (20) lies with its end face against the master piston (5).

**Revendications**

1. Maître-cylindre pour la commande d'un milieu sous pression destiné à l'actionnement de récepteurs de milieu sous pression, en particulier de cylindres de freins de véhicules, présentant les particularités suivantes:

a) le maître-cylindre présente un alésage (2) de cylindre, fermé d'un côté, muni d'une entrée de remplissage (9, 11) et d'un raccord de récepteurs (10),

b) un piston émetteur (5) est monté mobile en translation et à joint étanche dans l'alésage (2) du cylindre,

c) le piston émetteur (5) peut être actionné à l'encontre de la force d'un premier ressort (6), le perçage de remplissage (9) étant obturé,

d) pour l'actionnement du piston émetteur (5), il est prévu un organe d'actionnement (14),

e) dans l'alésage (2) du cylindre, est formée une chambre (16) placée en amont du piston émetteur (5), qui présente un raccord de milieu sous pression (17) et un raccord de retour (18) séparé du raccord de milieu sous pression (17),

f) le raccord de retour (18) peut être commandé par l'intermédiaire d'un dispositif (15) de commande de la pression qui peut être actionné par l'organe d'actionnement (14),

g) l'organe d'actionnement (14) présente un poussoir (19) qui est disposé de manière à pouvoir être enfoncé dans la chambre (16) sur le côté qui est à l'opposé du piston émetteur (5),

h) le poussoir (19) présente un prolongement (20) échelonné vers l'intérieur qui est engagé axialement dans la chambre (16), caractérisé par les particularités suivantes:

i) le dispositif (15) de commande de la pression présente un manchon de commande (21) guidé à glissement sur le prolongement (20) du poussoir (15),

j) le manchon de commande (21) est monté pour coulisser en sens inverse du sens de l'actionnement à l'encontre de la force d'un deuxième ressort (22),

k) le manchon de commande (21) présente, sur son côté dirigé vers la chambre (16), une arête de commande (25) qui coopère avec le retour (18),

l) la chambre (16) peut être limitée, sur son côté qui fait face au piston de commande (5), par le manchon de commande (21) et par le prolongement (20) du poussoir (19),

m) le manchon de commande (21) peut être actionné en translation par rapport au prolongement (20) au moyen du poussoir (19), par l'intermédiaire du deuxième ressort (22), avec étranglement du retour (18), à l'encontre de l'action de la pression de refoulement de milieu sous pression formée dans la chambre (16).

2. Maître-cylindre selon la revendication 1, caractérisé en ce que le deuxième ressort (22) est monté appuyé, d'un côté, contre un épaulement (23) du poussoir (19) formé par le prolongement (20) et, d'autre part, contre le manchon de commande (21).

3. Maître-cylindre émetteur selon l'une des revendications 1 et 2, caractérisé en ce que le deuxième ressort (22) peut être appuyé contre le manchon de commande (21) par l'intermédiaire d'une coupelle de ressort (24) qui peut se déplacer en translation dans la région du prolongement (20).

4. Maître-cylindre selon l'une des revendications 1 à 3, caractérisé en ce que le prolongement (20) présente une butée (26) qui limite la mobilité en translation en direction de l'extrémité libre du prolongement (20), du manchon de commande (21) ou de la coupelle de ressort (24) prévue pour l'appui du ressort (22) qui lui est associée.

5. Maître-cylindre selon l'une des revendications 1 à 4, caractérisé en ce que l'alésage (2) du cylindre présente dans la région de la chambre (16) une butée (27) solidaire du corps qui limite la liberté de translation du poussoir (19) vers le côté d'actionnement.

6. Maître-cylindre selon l'une quelconque des revendications 1 à 5, caractérisé en ce que, lorsque le poussoir (19) n'est pas actionné, le prolongement (20) est en contact avec le piston émetteur (5) par sa face frontale.